# EUROPEAN PATENT APPLICATION

(11) **EP 3 190 794 A1**
(43) Date of publication of application: **12.07.2017**
(21) Application number: 15852423.1
(22) Date of filing: 20.05.2015
(51) Int. Cl.: H04N 21/231

(54) **SYSTEM, DEVICE AND METHOD FOR IMPLEMENTING HLS CHANNEL PLAYBACK SERVICE, AND STORAGE MEDIUM**

(30) Priority: 21.10.2014 CN 201410563506
(71) Applicant: ZTE Corporation, Shenzhen, Guangdong 518057 (CN)
(72) Inventor: WANG, Weiqiang, Shenzhen Guangdong 518057 (CN)
(74) Representative: Regimbeau
(86) International application number: PCT/CN2015/079375
(87) International publication number: WO 2016/062081

(57) **Abstract**

Disclosed is a system for implementing an HLS channel playback service, including: a management server, configured to monitor each playback server in a playback server cluster, and allocate an HLS channel to each playback server in the playback server cluster, where the playback server cluster includes at least two playback servers; the playback server, configured to record a live broadcasting code stream of the HLS channel allocated by the management server, share a recorded ts slice file and corresponding ts slice file information, and transmit an index file and/or a ts slice file formed by the acquired ts slice file information to a user terminal in response to an index request or a ts slice request initiated by the user terminal; and the user terminal, configured to receive the index file and/or ts slice file. A method and a device for implementing an HLS channel playback service, and a computer storage medium are also disclosed.

## Description

### TECHNICAL FIELD

The present invention relates to the technical field of Internet video playing, and in particular relates to a system, a device and a method for implementing an HLS (HTTP Live Streaming) channel playback service, and a computer storage medium.

### BACKGROUND

An Internet video HLS standard proposed by the Apple Company has already been widely applied to an HLS channel live broadcasting service, while the channel time-shifting playback service of various traditional interactive Internet televisions (IPTV (Internet Protocol Television)) are also implemented by using the HLS.

At present, a basic implementing solution of the HLS channel playback service is that each server respectively provides the HLS channel playback service after performing the recording independently. However, by using this way, when software or hardware is abnormal, the server cannot provide the service, which may lead to the long-term interruption of the service for a user and may influence the user experience; and moreover, after the number of the users is increased, the service capacity of a single server always cannot meet the application need of the users. Therefore, at a commercial operation mode, there is an urgent need for improving the service capacity and the service quality of an HLS channel service server.

In the existing actual application, multiple servers are always deployed, and each server respectively performs the HLS channel recording and storage, so that each server can provide all HLS channel playback services. At this mode, each server may download a live broadcasting slice from an HLS channel source station and records and stores the downloaded live broadcasting slice into a local server. Therefore, the existing implementing solution obviously has the following problems:
1) when all servers download the live broadcasting slices from the source station, the requirement for a bandwidth between each server and the source station is relatively high; and 2) all servers respectively store one live broadcasting slice, and the repeated storage problem is relatively obvious, so that the requirement on a local storage capacity is relatively high.

### SUMMARY

In view of this, embodiments of the present invention are expected to provide a system, a device and a method for implementing an HLS channel playback service, and a computer storage medium, which can save the use of a bandwidth between a server and a video source station, and can reduce the occupation of the local storage capacity of the server.

The technical solutions of embodiments of the present invention are implemented as follows.

Embodiments of the present invention provide a system for implementing an HLS channel playback service. The system includes a management server and a playback server cluster, where the playback server cluster includes at least two playback servers;
the management server is configured to monitor each playback server in the playback server cluster and allocate an HLS channel to each playback server in the playback server cluster;
the playback server is configured to record a live broadcasting code stream of the HLS channel allocated by the management server, share a recorded transport stream (ts) slice file and corresponding ts slice file information with other playback servers in the playback server cluster; acquire the ts slice file information corresponding to an index request in response to the index request initiated by a user terminal, form an index file and transmit to the user terminal; and acquire a ts slice file corresponding to a ts slice request in response to the ts slice request transmitted by the user terminal, and transmit the acquired ts slice file to the user terminal.

In the above-mentioned solution, the management server is further configured to broadcast a status query message to the playback server cluster; and allocate an HLS channel to each playback server according to the received status information returned by each playback server, and broadcast a channel recording message to the playback server cluster;
the playback server is further configured to receive the status query message transmitted by the management server and return status information of the playback server to the management server; and receive the channel recording message transmitted by the management server, and store the channel recording message into a local database.

In the above-mentioned solution, the management server is further configured to allocate all channels, for which recording is responsible by the playback server with an abnormal recording function, to other playback servers with a normal recording function for recording after the presence of the playback server with the abnormal recording function in the playback server cluster is discovered, and issue a channel altering message to all playback servers in the playback server cluster; and
the playback server is further configured to receive the channel altering message, and store the channel altering message into the local database.

The present invention further provides a playback server. The playback server includes a recording module, a distributive file system module, an information sharing module, a database module and a service module, where
the recording module is configured to record a live broadcasting code stream of an allocated HLS channel, store a recorded ts slice file into the distributive file system module, and store the ts slice file information corresponding to the ts slice file into the database module;
the distributive file system module is configured to store the recorded ts slice file and the corresponding ts slice file information, and share the ts slice file and the corresponding ts slice file information in the playback server cluster;
the information sharing module is configured to regularly update the ts slice file information corresponding to the ts slice file recorded by the recording module into the distributive file system module from the database module, and regularly import ts slice file information corresponding to ts slice files recorded by other playback servers in the playback server cluster to the database module from the distributive file system module;
the database module is configured to store all ts slice file information for query and searching; and
the service module is configured to acquire ts slice file information corresponding to an index request from the database module in response to the index request initiated by the user terminal, and form the index file and transmit to the user terminal; and acquire the ts slice file corresponding to the ts slice request from the distributive file system module in response to the ts slice request transmitted by the user terminal, and transmit the ts slice file to the user terminal.

In the above-mentioned solution, the service module further includes:
a status query unit, configured to receive a status query message transmitted by the management server, and return status information of a playback server, where the status query unit located, to the management server;
the recording module further includes:
   a channel recording unit, configured to receive a channel recording message transmitted by the management server, and store the channel recording message into the database module.

In the above-mentioned solution, the recording module further includes:
a channel altering unit, configured to receive a channel altering message when the management server issues the channel altering message, and store the channel altering message into the database module.

The present invention further provides a management server. The management server includes:
a status query module, configured to broadcast a status query message to each playback server in the playback server cluster;
a channel allocating module, configured to allocate an HLS channel to each playback server according to received status information returned by each playback server, and broadcast a channel recording message to the playback server cluster.

In the above-mentioned solution, the management server further includes:
an abnormality processing module, configured to allocate all channels, for which recording is responsible by the playback server with an abnormal recording function, to other playback servers with the normal recording function for recording after the playback server with the abnormal recording function is discovered in the playback server cluster, and issue the channel altering message to all playback servers in the playback server cluster.

The present invention further provides a method for implementing an HLS channel playback service. The method includes:
recording a live broadcasting code stream of an allocated HLS channel when the channel recording is performed, and sharing a recorded ts slice file and corresponding ts slice file information in a playback server cluster;
acquiring the ts slice file information corresponding to an index request in response to the index request initiated by a user terminal, and forming an index file and transmitting to the user terminal when the playback service is performed; and acquiring a ts slice file corresponding to a ts slice request in response to the ts slice request transmitted by the user terminal, and transmitting the ts slice file to the user terminal.

In the above-mentioned solution, the sharing the recorded ts slice file and the corresponding ts slice file information in the playback server cluster includes:
storing the ts slice file into a distributive file system;
storing the corresponding ts slice file information into a local database and the distributive file system, and regularly synchronizing the ts slice file information in the local database and the distributive file system.

In the above-mentioned solution, the method further includes:
receiving a channel recording message or a channel altering message;
storing the channel recording message or the channel altering message into the local database.

In the above-mentioned solution, the acquiring the ts slice file information corresponding to the index request includes:
acquiring the ts slice file information from the local database.

In the above-mentioned solution, the acquiring the ts slice file corresponding to the ts slice request includes:
acquiring the ts slice file from the distributive file system.

Embodiments of the present invention further provide a computer storage medium. The computer storage medium stores a computer executable instruction for executing the aforementioned method for implementing the HLS channel playback service.

The system, the device and the method for implementing the HLS channel playback service and the computer storage medium provided by embodiments of the present invention enable the ts slice files and the corresponding ts slice file information recorded by different playback servers to be shared in the playback server cluster by introducing the management server to allocate different HLS channels to different playback server to be recorded through the management server and using the distributive file system to store the transport stream (ts) slice files and the corresponding ts slice file information, so that the ts slice files and the corresponding ts slice file information recorded by different playback servers can be shared in the playback server cluster, thereby implementing the single-point recording and multi-point playback for the HLS channels; and meanwhile, the use of the bandwidth between the server and the video source station can be saved, and the occupation of the local storage capacity of the server can be reduced.

### BRIEF DESCRIPTION OF THE DRAWINGS

FIG. 1 is a schematic structural diagram illustrating a system for implementing an HLS channel playback service according to embodiments of the present invention;
FIG. 2 is a schematic structural diagram illustrating a playback server in the system for implementing the HLS channel playback service according to embodiments of the present invention;
FIG. 3 is a schematic diagram illustrating a channel recording flow in a method for implementing an HLS channel playback service according to embodiments of the present invention;
FIG. 4 is a schematic diagram illustrating a playback flow in the method for implementing the HLS channel playback service according to embodiments of the present invention;
FIG. 5 is a diagram illustrating message and data transmission time sequence in channel allocation management of the system for implementing the HLS channel playback service according to embodiments of the present invention;
FIG. 6 is a diagram illustrating message and data transmission time sequence in channel recording of the system for implementing an HLS channel playback service according to embodiments of the present invention;
FIG. 7 is a diagram illustrating message and data transmission time sequence in recorded information sharing of the system for implementing an HLS channel playback service according to embodiments of the present invention; and
FIG. 8 is a diagram illustrating message and data transmission time sequence in channel playback of the system for implementing an HLS channel playback service according to embodiments of the present invention.

### DETAILED DESCRIPTION

In order to more clearly describe embodiments and technical solutions of the present invention, the technical solutions of the present invention are described below in detail in combination with accompanying drawings and embodiments. It is apparent that the described embodiments are partial embodiments of the present invention rather than all embodiments of the present invention. On the basis of embodiments of the present invention, all other embodiments obtained by those ordinary skilled in the art on the premise of not contributing innovative work shall fall within the protection scope of the present invention.

In embodiments of the present invention, different HLS channels are allocated to different playback servers to be recorded by additionally arranging a management server, a distributive file system is used to store ts slice files and corresponding ts slice file information, so that the ts slice files and the corresponding ts slice file information recorded by different playback servers can be shared in a playback server cluster.

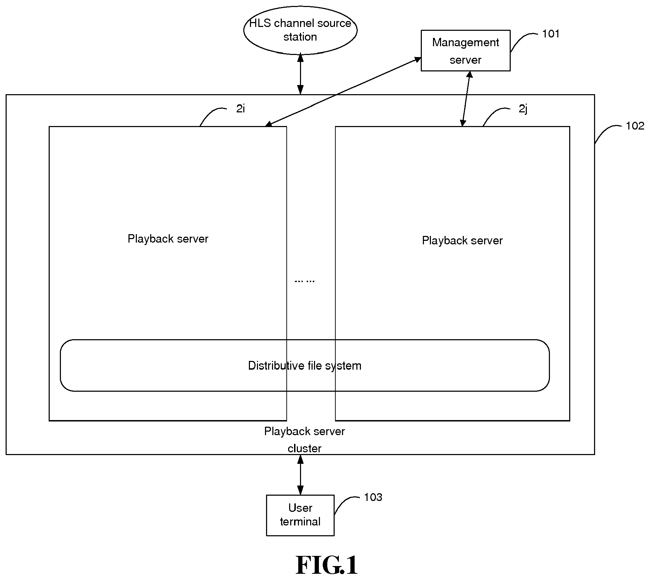

FIG. 1 is a schematic structural diagram illustrating a system for implementing an HLS channel playback service according to embodiments of the present invention. A shown in FIG. 1, the system includes a management server 101 and a playback server cluster 102, where the playback server cluster 102 includes at least two playback servers, any two playback servers can be marked with 2i and 2j, and i is a positive integer;
the management server101 is configured to monitor each playback server in the playback server cluster 102, and allocate an HLS channel to each playback server in the playback server cluster 102;
the playback server 2i is configured to record a live broadcasting code stream of the HLS channel allocated by the management server 101 and share a recorded transport stream (ts) slice file and corresponding ts slice file information with other playback servers 2j in the playback server cluster 102, j being a positive integer not equal to i; acquire the ts slice file information corresponding to an index request in response to the index request initiated by a user terminal 103, and form an index file and transmit to the user terminal 103; and acquire a ts slice file corresponding to a ts slice request in response to the ts slice request transmitted by the user terminal 103, and transmit the acquired ts slice file to the user terminal 103; and
the other playback servers 2j here may be one or more playback servers other than the playback server 2i; and the index request initiated by the user terminal 103 may be a m3u8 index request, and the index file may be correspondingly a m3u8 index file.

Furthermore, as shown in FIG. 1, when the user terminal 103 has a playback need, the index request may be transmitted to the playback server 2i, and the index file transmitted by the playback server 2i is received; the received index file is parsed, and the ts slice request is transmitted to the playback server 2i according to a content of the index file; and the ts slice file transmitted by the playback server 2i is received, and the ts slice file is decoded and played.

The management server 101, the playback server cluster 102 and the user terminal 103 are connected with one another through a network.

When the ts slice request is transmitted to the playback server 2i according to the content of the index file, the ts slice request may be transmitted to the playback server 2i according to a sequence of the content of the index file.

In actual application, the management server 101 is further configured to broadcast a status query message to each playback server in the playback server cluster 102; and allocate an HLS channel to each playback server according to the received status information returned by each playback server, and broadcast a channel recording message to the playback server cluster 102; and
accordingly, the playback server 2i is further configured to receive a status query message transmitted by the management server 101 and return status information of the playback server 2i to the management server 101; and receive a channel recording message transmitted by the management server 101, and store the channel recording message into a local database.

In actual application, the management server 101 is further configured to allocate all channels, for which recording is responsible by the playback server 2i with an abnormal recording function, to other playback servers 2j with the normal recording function for recording after it is discovered that there is the playback server 2i with the abnormal recording function in the server cluster 102, and issue a channel altering message to all playback servers in the playback server cluster 102;
the other playback servers 2j with the normal recording function here may be one or more playback servers other than the playback server 2i; and
the playback server 2i is correspondingly further configured to receive the channel altering message when the management server 101 issues the channel altering message, and store the channel altering message into the local database.

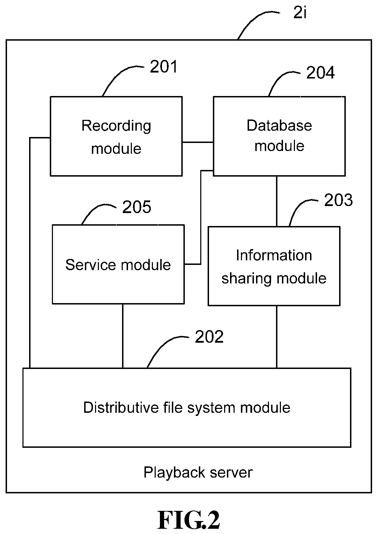

As shown in FIG. 2, the playback server 2i includes a recording module 201, a distributive file system module 202, an information sharing module 203, a database module 204 and a service module 205, where
the recording module 201 is configured to record a live broadcasting code stream of an HLS channel allocated by the management server 101, store the recorded ts slice file into the distributive file system module 202, and store the ts slice file information corresponding to the ts slice file into the database module 204;
where the ts slice file information includes a channel number, a storage path and a starting time corresponding to the ts slice file;
the distributive file system module 202 is configured to store the recorded ts slice file and the corresponding ts slice file information, and share the ts slice file and the corresponding ts slice file information in the playback server cluster 102;
the information sharing module 203 is configured to regularly update the ts slice file information corresponding to the ts slice file recorded by the recording module 201 into the distributive file system module 202 from the database module 204, and regularly import the ts slice file information corresponding to the ts slice file recorded by other playback servers 2j in the playback server cluster 102 to the database module 204 from the distributive file system module 202; that is: the ts slice file information in the database module 204 and the distributive file system module 202 of the playback server 2i is regularly synchronized;
the database module 204 is configured to store all ts slice file information for query and searching;
the service module 205 is configured to acquire the ts slice file information corresponding to the m3u8 index request from the database module 204 in response to the m3u8 index request initiated by the user terminal 103, and form the m3u8 index file and transmit to the user terminal 103; and acquire the ts slice file corresponding to the ts slice request from the distributive file system module 202 in response to the ts slice request transmitted by the user terminal 103, and transmit the ts slice file to the user terminal 103.

Both the playback server 2i and the playback server 2j refer to any one or more playback servers in the playback server cluster 102, and the constitutional structure of the playback server 2j and functions of each constitutional part thereof are completely same with that of the playback server 2i.

In the system for implementing the HLS channel playback service according to embodiments of the present invention, in order to monitor each playback server in the playback server cluster 102, the management server 101 includes a status query module which is configured to broadcast a status query message to each playback server in the playback server cluster;
accordingly, the service module 205 in the playback server 2i further includes a status query unit which is configured to receive the status query message transmitted by the management server 101, and return status information of the playback server 2i, where the status query unit located, to the management server 101,
where the status information includes a working status of each functional module in the playback server 2i as well as a load condition and an overall working status of the playback server 2i, etc.

The management server 101 further includes a channel allocating module which is configured to allocate an HLS channel to each playback server 2i according to the received status information returned by each playback server, and broadcast a channel recording message to the playback server cluster 102;
where the channel recording message includes a channel number, HLS channel source station information, and a name of the playback server responsible for recording;
accordingly, the recording module 201 in the playback server 2i further includes a channel recording unit which is configured to receive the channel recording message transmitted by the management server 101 and store the channel recording message into the database module 204.

In an embodiment, when there is a playback server with the abnormal recording function in the playback server cluster, the management server 101 further includes:
an abnormality processing module which is configured to allocate all channels, for which recording is responsible by the playback server 2i with the abnormal recording function, to other playback servers with the normal recording function for recording after the presence of the playback server 2i with the abnormal recording function is discovered in the playback server cluster 102, and issue the channel altering message to all playback servers in the playback server cluster.

Accordingly, the recording module 201 in the playback server 2i further includes a channel altering unit which is configured to receive the channel altering message when the management server issues the channel altering message, and store the channel altering message into the database module 204.

In actual application, the recording module 201, the information sharing module 203, the service module 205 and various units thereof can be implemented by a central processing unit (CPU), a microprocessing unit (MPU), a digital signal processor (DSP) or a field programmable gate array (FPGA) disposed at the playback server; and the channel allocating module and the abnormality processing module can be implemented by the central processing unit (CPU), the microprocessing unit (MPU), the digital signal processor (DSP) or the field programmable gate array (FPGA) disposed at the management server. The distributive file system module 202 and the database module 204 can be implemented by various memories or storage mediums.

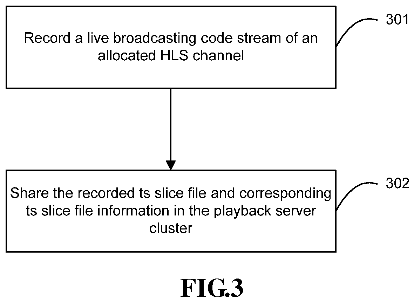

FIG. 3 is a schematic diagram illustrating a channel recording flow in a method for implementing an HLS channel playback service according to embodiments of the present invention. As shown in FIG. 3, the channel recording flow is applied to the playback server and includes following steps.

In step 301, a live broadcasting code stream of an allocated HLS channel is recorded;
specifically, the recording is implemented by the playback server; the recording module in the playback server acquires all channel information from the local database and determines whether the channel needs to be locally recorded or not for each channel information, if yes, the channel is locally recorded, and the playback server accesses a main m3u8 of an HLS channel source station to parse a ts slice file path in the main m3u8 and downloads the ts slice file locally.

The allocation here is the allocation carried out by the management server for a recording task of the HLS channel according to the status information returned by each playback server in the playback server cluster, and allocation results recorded by all HLS channels are stored in a local database of each playback server.

In an embodiment, prior to the execution of the step 301, the processing flow further includes: a channel recording message or a channel altering message is received; and the channel recording message or the channel altering message is stored into the local database.

Specifically, when the management server broadcasts the channel recording message or the channel altering message, the playback server receives the channel recording message or the channel altering message; and stores the channel recording message or the channel altering message into the local database; and thus, the allocation results recorded by all HLS channels are stored in the local database.

In step 302, the recorded ts slice file and the corresponding ts slice file information are shared in the playback server cluster;
the sharing in the playback server cluster here refers to: the playback server completing the recording shares the recorded ts slice file and the corresponding ts slice file information with other playback servers in the playback server cluster; and the other playback servers may be one or more;
specifically, the playback server stores the ts slice file into the distributive file system; stores the corresponding ts slice file information into a local database and the distributive file system of the playback server, and regularly synchronizes the ts slice file information in the local database and the distributive file system. That is: all ts slice file information is stored in the local database of the playback server and includes the ts slice file information corresponding to the ts slice file that is not recorded by the local playback server.

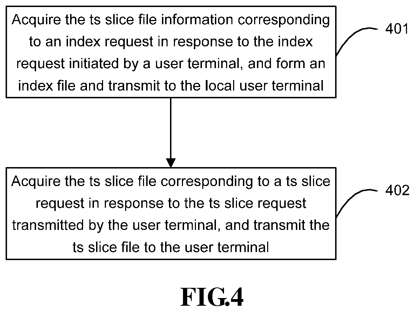

FIG. 4 is a schematic diagram illustrating a playback flow in the method for implementing the HLS channel playback service according to embodiments of the present invention. As shown in FIG. 4, the playback flow is applied to the playback server, and includes following steps.

In step 401, the ts slice file information corresponding to an index request is acquired in response to the index request initiated by a user terminal, and an index file is formed and transmitted to the user terminal;
the initiated index request here may be a m3u8 index request, and the index file may be correspondingly a m3u8 index file; and
specifically, when the user terminal initiates the m3u8 index request to the playback server, a request message includes information such as a channel number, a starting time, an ending time and the like; the playback server acquires the corresponding ts slice file information from the local database according to the channel number, the starting time and the ending time in response to the m3u8 index request initiated by the user terminal, and forms the m3u8 index file and transmits to the user terminal;
after receiving the m3u8 index file, the user terminal can parse a ts slice access path information sequence therefrom, and further transmits the ts slice request to the playback server according to the sequence; and in an embodiment of the present invention, after parsing the first ts slice access path information, the user terminal transmits a first ts slice request to the playback server.

In step 402, the ts slice file corresponding to the ts slice request is acquired in response to the ts slice request transmitted by the user terminal, and the ts slice file is transmitted to the user terminal;
specifically, in an embodiment of the present invention, the playback server acquires a first ts slice file from the distributive file system according to the first ts slice file access path information contained in the first ts slice request in response to the first ts slice request transmitted by the user terminal, and transmits the first ts slice file to the user terminal; and
after receiving the first ts slice file, the user terminal decodes and plays the first ts slice file, and continuously requests the subsequent ts slice files from the playback server.

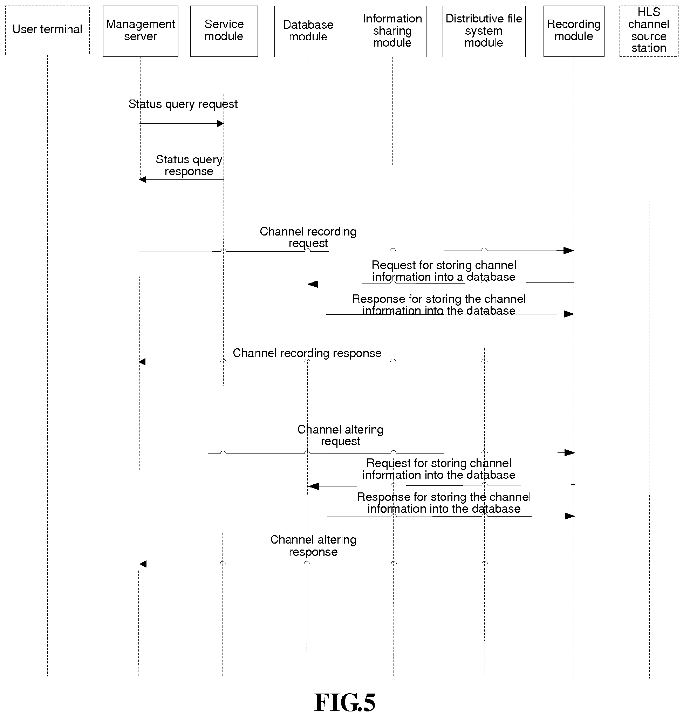

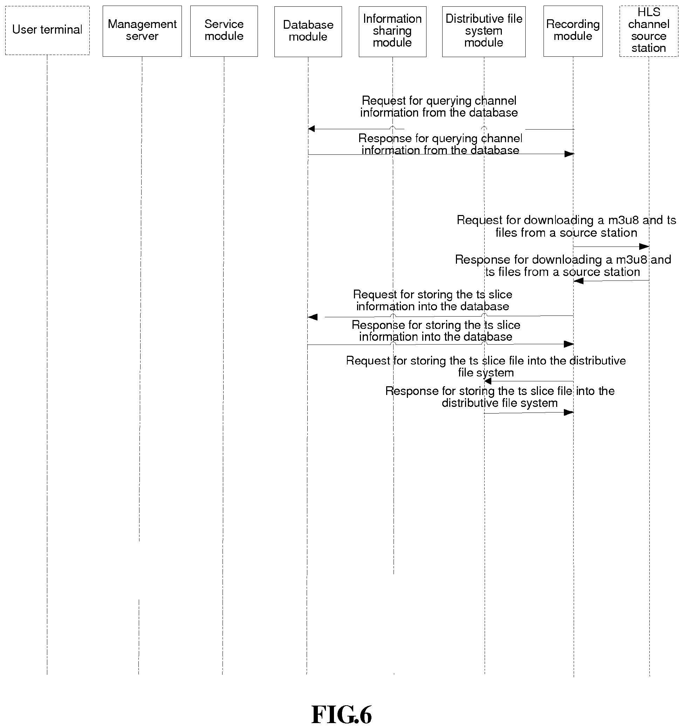

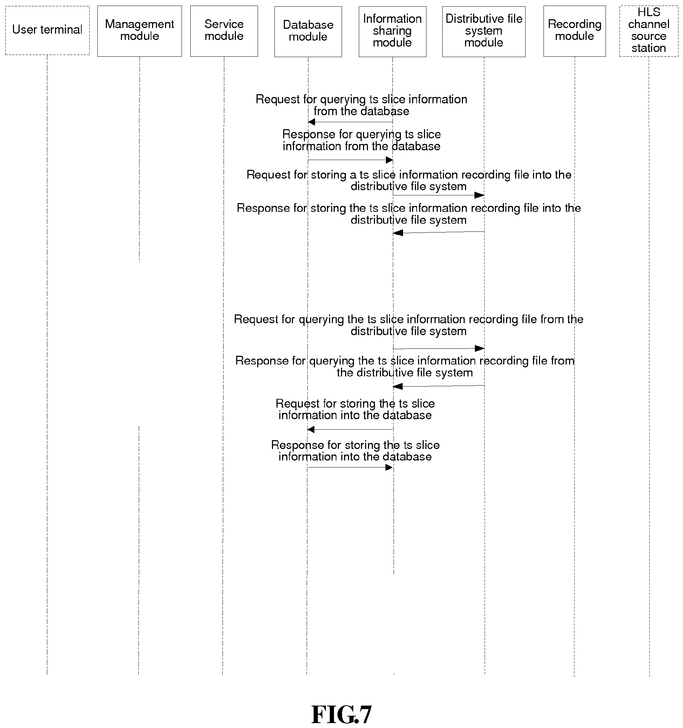

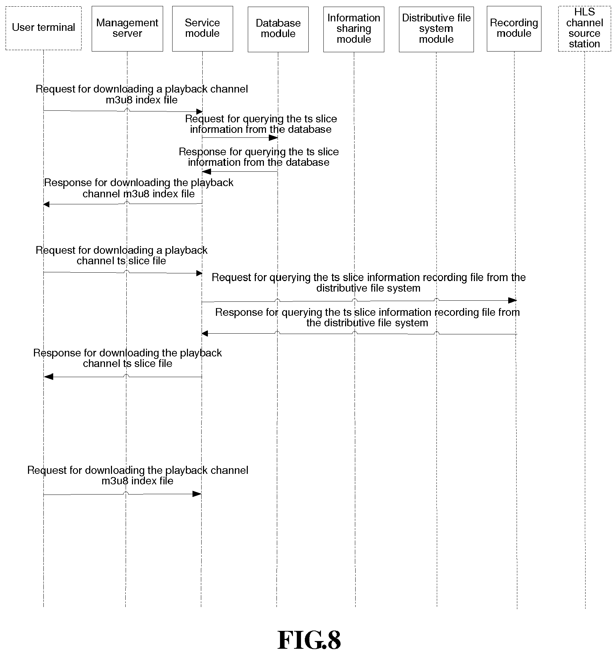

In an embodiment, when the system for implementing the HLS channel playback service provided in the above-mentioned embodiments is used for performing the channel allocation management, the message and data transmission time sequence among various devices and modules is as shown in FIG. 5; when the system for implementing the HLS channel playback service provided in the above-mentioned embodiments is used for performing the channel recording, the message and data transmission time sequence among various devices and modules is as shown in FIG. 6; and when the system for implementing the HLS channel playback service provided in the above-mentioned embodiments is used for sharing the recorded information, the message and data transmission time sequence among various devices and modules is as shown in FIG. 7; and when the system for implementing the HLS channel playback service provided in the above-mentioned embodiments is used for performing the channel playback, the message and data transmission time sequence among various devices and modules is as shown in FIG. 8.

Embodiments of the present invention further provide a computer storage medium. The computer storage medium stores a computer executable instruction, and the computer executable instruction is used for executing the aforementioned method for implementing the HLS channel playback service.

Those skilled in the art shall appreciate that embodiments of the present invention can be provided as a method, a system or a computer program product. Therefore, the present invention can adopt a form of hardware embodiments, software embodiments or embodiments combining the software and hardware. Moreover, the present invention can adopt a form of a computer program product implemented on one or more computer available storage mediums (including but not limited to a magnetic disc memory, an optic memory and the like) including a computer available program code.

The present invention is described with reference to flow charts and/or block diagrams of the method, the device (system) and the computer program product according to embodiments of the present invention. It shall be appreciated that each flow and/or each block in the flow charts and/or block diagrams and the combination of each flow and/or each block in the flow charts and/or the block diagrams can be implemented by the computer program instructions. These computer program instructions can be provided to processors of a general computer, a dedicated computer, an embedded processor or other programmable data processing devices to produce a machine, so that the instructions executed by the processors of the computer or other programmable data processing devices produce an apparatus for implementing one or more flows of the flow charts and/or functions specified in one block or more blocks of the block diagrams.

These computer program instructions may also be stored in a computer readable memory which can guide the computer or other programmable data processing devices to work in a specific way, so that the instructions stored in the computer readable memory produce a manufacture including the instruction apparatus, and the instruction apparatus implements one flow or more flows of the flow charts and/or the functions specified in one block or more blocks of the block diagrams.

These computer program instructions may also be loaded onto the computer or other programmable data processing devices to enable the computer or other programmable devices to execute a series of operation steps to produce the processing implemented by the computer, so that the instructions executed by the computer or other programmable devices provide steps for implementing one flow or more flows of the flow chars and/or the functions specified in one block or more blocks of the block diagrams.

The above descriptions are only preferred embodiments of the present invention, and are not used to limit the protection scope of the present invention.

## Claims

1. A system for implementing a HTTP Live Streaming HLS channel playback service, comprising a management server and a playback server cluster, wherein the playback server cluster comprises at least two playback servers;
the management server is configured to monitor each playback server in the playback server cluster and allocate an HLS channel to each playback server in the playback server cluster;
the playback server is configured to record a live broadcasting code stream of the HLS channel allocated by the management server, share a recorded transport stream ts slice file and corresponding ts slice file information with other playback servers in the playback server cluster, acquire ts slice file information corresponding to an index request in response to the index request initiated by a user terminal to form an index file and transmit the index file to the user terminal, acquire a ts slice file corresponding to a ts slice request in response to the ts slice request transmitted by the user terminal, and transmit the acquired ts slice file to the user terminal.

2. The system for implementing the HLS channel playback service according to claim 1, wherein the management server is further configured to broadcast a status query message to the playback server cluster, allocate an HLS channel to each playback server according to the received status information returned by each playback server, and broadcast a channel recording message to the playback server cluster;
the playback server is further configured to receive the status query message transmitted by the management server and return status information of the playback server to the management server, receive the channel recording message transmitted by the management server, and store the channel recording message into a local database.

3. The system for implementing the HLS channel playback service according to claim 1 or 2, wherein
the management server is further configured to allocate all channels, for which recording is responsible by the playback server with an abnormal recording function, to other playback servers with a normal recording function for recording after presence of the playback server with the abnormal recording function in the playback server cluster is discovered, and issue a channel altering message to all playback servers in the playback server cluster; and
the playback server is further configured to receive the channel altering message, and store the channel altering message into the local database.

4. A playback server, comprising a recording module, a distributive file system module, an information sharing module, a database module and a service module, wherein
the recording module is configured to record a live broadcasting code stream of an allocated HLS channel, store a recorded ts slice file into the distributive file system module, and store ts slice file information corresponding to the ts slice file into the database module;
the distributive file system module is configured to store the recorded ts slice file and the corresponding ts slice file information, and share the ts slice file and the corresponding ts slice file information in the playback server cluster;
the information sharing module is configured to regularly update the ts slice file information corresponding to the ts slice file recorded by the recording module into the distributive file system module from the database module, and regularly import ts slice file information corresponding to ts slice files recorded by other playback servers in the playback server cluster to the database module from the distributive file system module;
the database module is configured to store all ts slice file information for query and searching; and
the service module is configured to acquire ts slice file information corresponding to an index request from the database module in response to the index request initiated by a user terminal, and form an index file and transmit to the user terminal, acquire the ts slice file corresponding to a ts slice request from the distributive file system module in response to the ts slice request transmitted by the user terminal, and transmit the ts slice file to the user terminal.

5. The playback server according to claim 4, wherein the service module further comprises:
a status query unit, configured to receive a status query message transmitted by the management server, and return status information of a playback server, where the status query unit located, to the management server;
the recording module further comprises:
a channel recording unit, configured to receive a channel recording message transmitted by the management server, and store the channel recording message into the database module.

6. The playback server according to claim 4 or 5, wherein the recording module further comprises:
a channel altering unit, configured to receive a channel altering message when the management server issues the channel altering message, and store the channel altering message into the database module.

7. A management server, comprising
a status query module, configured to broadcast a status query message to each playback server in a playback server cluster; and
a channel allocating module, configured to allocate an HLS channel to each playback server according to received status information returned by each playback server, and broadcast a channel recording message to the playback server cluster.

8. The management server according to claim 7, further comprising
an abnormality processing module, configured to allocate all channels, for which recording is responsible by the playback server with an abnormal recording function, to other playback servers with a normal recording function for recording after presence of the playback server with the abnormal recording function in the playback server cluster is discovered, and issue a channel altering message to all playback servers in the playback server cluster.

9. A method for implementing an HLS channel playback service, comprising
recording a live broadcasting code stream of an allocated HLS channel when channel recording is performed, and sharing a recorded ts slice file and corresponding ts slice file information in a playback server cluster; and
acquiring the ts slice file information corresponding to an index request in response to the index request initiated by a user terminal, and forming an index file and transmitting to the user terminal when the playback service is performed; and acquiring a ts slice file corresponding to a ts slice request in response to the ts slice request transmitted by the user terminal, and transmitting the ts slice file to the user terminal.

10. The method according to claim 9, wherein the sharing the recorded ts slice file and the corresponding ts slice file information in the playback server cluster comprises:
storing the ts slice file into a distributive file system;
storing the corresponding ts slice file information into a local database and the distributive file system, and regularly synchronizing the ts slice file information in the local database and the distributive file system.

11. The method according to claim 9 or 10, further comprising:
receiving a channel recording message or a channel altering message; and
storing the channel recording message or the channel altering message into the local database.

12. The method according to claim 9, wherein the acquiring the ts slice file information corresponding to the index request comprises:
acquiring the ts slice file information from the local database.

13. The method according to claim 9, wherein the acquiring the ts slice file corresponding to the ts slice request comprises:
acquiring the ts slice file from the distributive file system.

14. A computer storage medium storing a computer executable instruction for executing the method for implementing the HLS channel playback service according to any of claims 9 to 13.
